# FASCICULE DE BREVET EUROPEEN

(11) **EP 0 970 151 B1**
(45) Date de publication et mention de la délivrance du brevet: **23.05.2001**
(21) Numéro de dépôt: 98917246.5
(22) Date de dépôt: 26.03.1998
(51) Int. Cl.: C09C 1/00

(54) **PIGMENT JAUNE ZIRCON-OXYDE DE PRASEODYME ET COMPOSITION POUR SA FABRICATION**
GELBES ZIRKON-PRASEODYMOXID-PIGMENT SOWIE ZUSAMMENSETZUNG FÜR SEINER HERSTELLUNG
PRASEODYMIUM ZIRCON-OXIDE YELLOW PIGMENT AND COMPOSITION FOR MAKING SAME

(30) Priorité: 28.03.1997 FR 9703871
(43) Date de publication de la demande: 12.01.2000
(73) Titulaire: SOCIETE EUROPEENNE DES PRODUITS REFRACTAIRES, F-92400 Courbevoie (FR)
(72) Inventeur: BERT, Christophe, F-84510 Caumont-sur-Durance (FR); URFFER, Daniel, René, F-84310 Morières les Avignon (FR)
(74) Mandataire: Colas, Jean-Pierre
(86) Numéro de dépôt international: FR9800618
(87) Numéro de publication internationale: WO9844054

(56) Documents cités:
- DE-A- 1 910 008
- US-A- 2 992 123
- US-A- 3 012 898
- DATABASE WPI Week 8728 Derwent Publications Ltd., London, GB; AN 87-194589 XP002045402 & JP 62 123 058 A (SUMITUMO CEMENT CO.) , 4 juin 1987

## Description

L'invention concerne un nouveau pigment jaune de zircon et d'oxyde de praséodyme, utile notamment pour la coloration de matières céramiques émaillées ou non.

La coloration des matières céramiques se fait grâce à l'introduction d'un pigment dans l'émail ou directement dans la composition pour les matières céramiques non émaillées.

Comme tout colorant ces pigments doivent présenter certaines propriétés colorimétriques : nuance ou tonalité et force colorante ou intensité. Mais ils doivent aussi avoir une certaine stabilité et résistance chimique du fait de leur emploi à haute température et de leur contact avec des silicates fondus.

Seules quelques substances ayant une structure cristalline stable peuvent répondre à ces exigences : spinelle, corindon, rutile, silicate de zirconium...

Aujourd'hui les pigments utilisés sont le plus souvent synthétiques. Parmi eux, les silicates de zirconium ou zircon, découverts et développés après la deuxième guerre mondiale, représentent plus de la moitié de l'ensemble des couleurs céramiques. La couleur est obtenue en incorporant dans le réseau du zircon des éléments correspondant à des métaux de transition. Pour introduire ces ions étrangers dans le réseau cristallin du zircon, il faut opérer au cours de la synthèse de ce composé à partir des oxydes constituants : dioxyde de zirconium appelé communément zircone et dioxyde de silicium (silice). Le métal apportant la couleur est lui-même le plus souvent sous forme d'oxyde ou d'hydroxyde. On peut signaler que l'ajout de minéralisateurs permet de synthétiser le zircon de manière efficace et économique en diminuant la température de synthèse de 300 à 500°C (ces minéralisateurs se volatilisent durant la synthèse)

US-A-2 441 447 déposé en 1948 par Harshaw indique qu'on obtient une couleur bleue par introduction de vanadium (V₂O₅) dans le zircon. En 1952, Fujii et Sono sont les auteurs de la première publication (Repts. Govt. Res. Inst. Ceram., 6, 18, 1952) concernant le jaune obtenu par introduction de praséodyme (Pr₆O₁₁). Enfin, en 1965, US-A- 3 166 430 et US-A- 3 189 475 décrivent le rose obtenu par introduction de fer (Fe(OH)₂).

Il existe aussi d'autres couleurs type zircon plus marginales telle que le rouge au sulfo-séléniure de cadmium.

Les trois pigments : bleu zircon-vanadium, jaune zircon-praséodyme et rose zircon-fer sont très utilisés car, outre leurs qualités colorimétriques, ils présentent une bonne stabilité et une grande aptitude au mélange permettant ainsi d'obtenir une grande gamme de couleurs.

Parmi eux, le jaune au praséodyme est le pigment le plus utilisé ; il représente actuellement environ la moitié des couleurs de type zircon produites dans le monde. Cette place prépondérante est principalement due au fait que c'est une couleur très pure. Ceci est mis en évidence sur le diagramme colorimétrique proposé par R. A. Eppler positionnant tous les pigments céramiques («Selecting Ceramic Pigments», Am. Ceram. Soc. Bull., Vol. 66, No 11, 1987). Par rapport aux autres colorants jaunes le jaune zircon-praséodyme est plus pur, plus stable, plus polyvalent dans les émaux et en mélange avec tout autre colorant. Par ailleurs il est a noté que d'autres secteurs industriels comme celui des colorants pour plastiques s'intéressent au jaune zircon-praséodyme non pas pour ses propriétés de stabilité en température mais pour ses propriétés colorimétriques. En l'occurrence il s'agit de remplacer un jaune au sulfure de cadmium qui pose des problèmes d'hygiène-sécurité-environnement.

Depuis la première publication de Fujii et Sono en 1952, les différents travaux de recherche ont montré qu'il était souhaitable d'utiliser un oxyde de praséodyme purifié d'autres terres rares pour obtenir un jaune très pur (E. Kato, H. Takashima, Rep. Gov. Ind. Res. Inst. Nagoya 5, 147-150, 1956). Dans les années soixante la production du jaune zircon-praséodyme est devenue possible à l'échelle industrielle grâce aux progrès de la chimie des terres rares qui rend disponible un oxyde de praséodyme de pureté appropriée : US-A-2 992 123 et US-A-3 012 898. Depuis les nombreuses études ont permis de mieux comprendre le mécanisme de réaction et d'apporter quelques améliorations concernant le choix des minéralisateurs. Les pigments sont actuellement élaborés à partir de composition comprenant de 3 à 15% de minéralisateurs ; ces minéralisateurs sont des halogénures de métaux alcalins ou alcalino-terreux ou d'ammonium. Des exemples spécifiques de ces minéralisateurs sont les chlorure et fluorure de sodium et le chlorure d'ammonium. En ce qui concerne la qualité de la couleur, il a été établi que l'augmentation du taux d'oxyde de praséodyme permet d'améliorer l'intensité mais au delà de 5% de la composition l'intensité de la couleur n'augmente plus (R. Eppler, Am. Soc. Bull. Vol. 56 n°2 p. 213-216, 1977). L'analyse chimique des pigments actuels révèle des compositions avec 50 à 70% de ZrO₂, 20 à 35% de SiO₂ et 3 à 6% de Pr₆O₁₁.

L'invention vise à améliorer la qualité de ces pigments jaune zircon-praséodyme.

Plus particulièrement, l'invention concerne un nouveau pigment jaune du type zircon-prasédoyme caractérisé en ce qu'il présente l'analyse chimique suivante, en % en poids sur la base des oxydes :
52,6 à 71,7% de ZrO₂,
21,6 à 38,8% de SiO₂,
3 à 6,4% de Pr₆O₁₁, et
0,3 à 2,2% de Y₂O₃.

De préférence, le pigment selon l'invention présente la composition chimique analysée suivante :
55 à 71% de ZrO₂,
22 à 38% de SiO₂,
3 à 6% de Pr₆O₁₁, et
0,4 à 1,5% de Y₂O₃.

On préfère tout particulièrement que le pigment de l'invention ait la composition chimique analysée suivante :
56 à 71% de ZrO₂,
23 à 38% de SiO₂,
4,5 à 5,5% de Pr₆O₁₁, et
0,5 à 1% de Y₂O₃.

De manière surprenante l'ajout d'oxyde de d'yttrium permet d'améliorer la tonalité du pigment et d'obtenir un jaune au moins aussi intense dont la pureté est encore plus marquée et cela sans que la stabilité ou la résistance chimique ne soit affectée.

Ce pigment est particulièrement bien adapté pour la coloration de matières céramiques mais convient aussi pour des utilisations plus diverses telles que la coloration de matières plastiques.

La description qui va suivre faite en se référant aux dessins annexés mettra bien en évidence le rôle spécifique de l'oxyde d'yttrium.

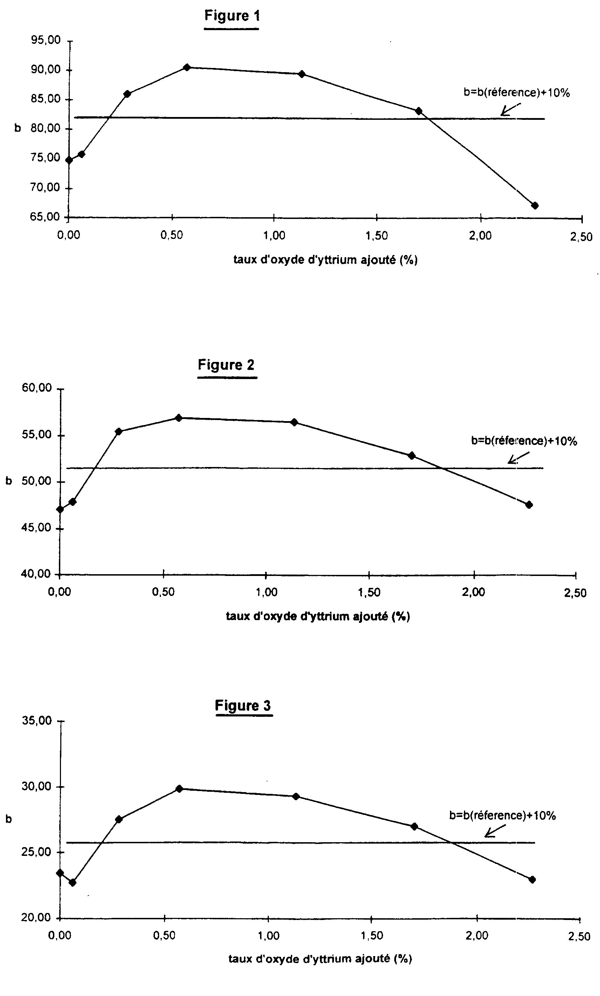

Les figures 1, 2 et 3 sont des graphiques qui montrent l'évolution de la composante b (dans le système Lab) en fonction du taux d'oxyde d'yttrium pour différents types d'émaux.

Les exemples donnés proviennent d'une étude réalisée sur la base de la méthodologie classique bien connue de l'homme de l'art pour ce type de pigment :
- préparation du pigment par mélange des matières premières, cuisson, broyage et lavage,
- émaillage de carreaux, et
- mesure de couleur avec un appareillage de type Lab

Les différents constituants (zircone, silice, oxyde de praséodyme, oxyde d'yttrium et minéralisateurs) sont pesés, puis mélangés. Le mélange obtenu est enfermé dans une gazette céramique préalablement étanchée avec une barbotine de silice pour éviter le départ des minéralisateurs puis cuit avec un palier de 6h à 960°C. Après cuisson le pigment se trouve aggloméré. Il est d'abord concassé puis soumis à un broyage humide dans un broyeur à boulets de zircone frittée. Après ces traitements, le pigment présente habituellement un diamètre médian de 10 µm environ. Il est ensuite lavé trois fois à l'eau chaude pour éliminer toute trace de minéralisateur puis il est séché et désaggloméré.

Pour l'émaillage, des carreaux cuits non émaillés sont utilisés comme support (ou tesson). Les constituants de l'émail sont apportés par des frittes commerciales. Le pigment est ajouté à cette fritte dans les proportions souhaitées et l'ensemble est soumis à un broyage humide. Les carreaux sont recouverts à la main de l'émail puis séchés et cuits avec un palier de 1h30mn à 1065°C. Les carreaux ainsi émaillés sont aptes à une mesure colorimétrique précise.

La mesure de couleur est un problème bien maîtrisé dans l'industrie depuis de nombreuses années. Le système de Hunter dit «Lab» est le plus utilisé dans l'industrie des matières céramiques. Il a été spécialement mis au point pour mesurer la couleur d'objets réfléchissant d'une façon diffuse et vus sous un illuminant «lumière du jour».

Le colorimètre type Hunterlab donne :
- une composante L représentant la clarté de la couleur (0 pour le noir et 100 pour un blanc parfait ; L faible pour une couleur intense et L fort pour une couleur plus pale)
- une composante a représentant la tonalité vert-rouge (a négatif pour une tonalité verte et a positif pour une tonalité rouge)
- une composante b représentant la tonalité bleu-jaune (b négatif pour une tonalité bleue et b positif pour une tonalité jaune)

Les résultats obtenus avec ce type d'appareillage sont fiables et reproductibles.

### Influence de la teneur en oxyde d'yttrium

### a) Pour un taux d'oxyde de praséodyme optimum

Ces premiers exemples concernent l'influence de l'ajout d'oxyde d'yttrium en remplacement de la zircone pour un taux d'oxyde de praséodyme constant et égal à 5% en émail transparent.

La composition massique des pigments testés est la suivante
- zircone thermique monoclinique: de 55,16 à 56,67%
- silice (< 44 µm) : 27, 57 à 28,33%
- oxyde de praséodyme : 5%
- oxyde d'yttrium : de 0 à 2,27%
- minéralisateurs :
   - chlorure d'ammonium : 3,4%
   - chlorure de sodium : 2,6%
   - fluorure de sodium : 4%
en gardant les proportions stoechiométriques ZrO₂ 2/3, SiO₂ 1/3 retenues habituellement.

La zircone thermique utilisée est une zircone classique pour pigments commercialisés sous la dénomination CC10 par la Demanderesse. Cette zircone contient naturellement environ 0,1% d'oxyde d'yttrium qui n'apparaissent pas dans les tableaux suivants. La silice correspond à une poudre de quartz usuelle en couleur fournie par ACI Mineral. L'oxyde de praséodyme, produit de référence en couleur jaune, est fourni par Rhône Poulenc. Il s'agit d'un produit présentant l'analyse chimique suivante : Pr₆O₁₁ 96% minimum, CeO₂ 3% maximum, Fe₂O₃ 0,05% maximum et autres oxydes décelables : NdO₃, LaO₃. Les minéralisateurs sont des halogénures classiques fournis par Ajax Chemicals. Pour obtenir un émail transparent, le pigment a été mélangé à raison de 10% en poids avec une fritte commerciale (KD203 de FERRO Corp.).

Les résultats sont regroupés dans le tableau 1

**TABLEAU 1**

| N° exemple | 1* | 2** | 3 | 4 | 5 | 6 | 7** |
|---|---|---|---|---|---|---|---|
| CC10 (%) | 56,67 | 56,63 | 56,48 | 56,29 | 55,91 | 55,53 | 55,16 |
| silice (%) | 28,33 | 28,31 | 28,24 | 28,14 | 27,96 | 27,77 | 27,57 |
| Y₂O₃ ajouté (%) | 0 | 0,06 | 0,28 | 0,57 | 1,13 | 1,70 | 2,27 |
| L | 83,2 | 83,5 | 81,8 | 81,6 | 81,1 | 81,0 | 81,9 |
| a | -3,5 | -4,0 | -0,9 | +0,6 | +2,3 | -0,9 | -1,3 |
| b | +74,7 | +75,7 | +86,0 | +90,5 | +89,5 | +83,1 | +67,3 |

| | | | | | | | |
|---|---|---|---|---|---|---|---|
| * produit de référence, en dehors de l'invention | | | | | | | |
| ** produit en dehors de l'invention | | | | | | | |

La figure 1 permet de mieux visualiser les résultats. On considère que l'amélioration est significative lorsque la composante b est supérieure d'environ 10% ou plus à la composante b de la référence. On déduit donc qu'un ajout de 0,2 à 1,8% d'oxyde d'yttrium permet d'améliorer la composante jaune (b). L'ajout d'oxyde d'yttrium selon l'invention permet d'obtenir un pigment dont la tonalité est nettement améliorée ; on peut en effet atteindre +90 pour la composante b alors que sur le diagramme de R. A. Eppler déjà cité, le jaune zircon-praséodyme se situe aux environs de +70.

Il est remarquable que cette amélioration de la tonalité ne se fasse pas au détriment de l'intensité et de la pureté de la couleur. On constate au contraire qu'on obtient une couleur plus pure (a plus proche de 0) et que L a tendance à diminuer ce qui signifie que l'intensité est légèrement améliorée en présence d'oxyde d'yttrium.

### b) Pour un taux d'oxyde de praséodyme non optimisé

Pour des raisons économiques, certains pigments jaune zircon-praséodyme industriels sont fabriqués avec un taux d'oxyde de praséodyme dans la composition inférieur à 5%. En effet, l'oxyde de praséodyme est l'élément le plus cher de la composition d'un jaune zircon-praséodyme et la qualité de ce pigment est telle qu'un jaune satisfaisant peut être obtenu dès que le taux d'oxyde praséodyme atteint au moins 3%.

Il est intéressant de voir l'influence de l'ajout d'oxyde d'yttrium dans ce cas là.

La composition massique des pigments testés est la suivante :
- zircone thermique monoclinique: de 56,67 à 58,0%
- silice (< 44µm) : 28,33 à 29,0%
- oxyde de praséodyme : 3 ou 4%
- oxyde d'yttrium : de 0 à 1,5%
- minéralisateurs :
   - chlorure d'ammonium : 3,4%
   - chlorure de sodium : 2,6%
   - fluorure de sodium : 4%
en gardant les proportions stoechiométriques ZrO₂ 2/3, SiO₂ 1/3 retenues habituellement.

Les pigments ont été synthétisés selon les conditions décrites précédemment et comparés dans l'émail transparent. Le tableau 2 résume les résultats.

**TABLEAU 2**

| N° exemple | 8* | 9 | 10* | 11 | 12 |
|---|---|---|---|---|---|
| CC10(%) | 57,33 | 56,67 | 58 | 57,33 | 57 |
| silice (%) | 28,67 | 28,33 | 29 | 28,67 | 28,5 |
| Pr₆O₁₁(%) | 4,0 | 4,0 | 3,0 | 3,0 | 3,0 |
| Y₂O₃ ajouté (%) | 0 | 1,0 | 0 | 1,0 | 1,5 |
| L | 83,5 | 80,1 | 84,0 | 81,3 | 81,1 |
| a | -5,4 | +2,2 | -6,0 | -0,7 | -0,1 |
| b | +70,3 | +79,8 | +66,4 | +78,1 | +74,8 |

| | | | | | |
|---|---|---|---|---|---|
| * produit de référence, en dehors de l'invention | | | | | |

Il apparaît clairement que l'ajout d'oxyde d'yttrium permet d'améliorer la composante b de manière significative (supérieure à 10%) alors que l'intensité et la pureté sont meilleures elles aussi.

La couleur obtenue dans l'exemple 9 avec seulement 4% d'oxyde de praséodyme (et 1% d'oxyde d'yttrium) est même meilleure que la référence (exemple 1) avec 5% d'oxyde de praséodyme. Il en est de même pour l'exemple 11.

On en conclut que l'ajout d'oxyde d'yttrium permet d'améliorer la tonalité du pigment jaune zircon-praséodyme et ce pour un taux d'oxyde de praséodyme optimum ou non.

### Influence du mode d'apport de l'oxyde d'vttrium

Pour certaines applications autres que les pigments, on utilise une zircone stabilisée à l'oxyde d'yttrium. Nous avons étudié le comportement de ce type zircone en suivant la même méthode que celle utilisée précédemment. Ceci revient à étudier l'influence de l'oxyde d'yttrium dans les deux cas suivants : lorsqu'il est apporté par la zircone stabilisée ou lorsqu'il est ajouté à celle-ci au moment de la synthèse du pigment. On néglige l'oxyde d'yttrium normalement présent dans la zircone et apporté de manière involontaire (environ 0,1% dans la zircone thermique utilisée). Les résultats sont regroupés dans le tableau 3.

**TABLEAU 3**

| N° Exemple | Source de zircone | Y₂O₃(%) apporté par la zircone | Y₂O₃ (%) ajouté | Y₂O₃(%) total dans le pigment | L | a | b |
|---|---|---|---|---|---|---|---|
| 1* | 100% de zircone thermique monoclinique | 0 | 0 | 0 | 83,2 | - 3,5 | + 74,7 |
| 4 | 100% de zircone thermique monoclinique | 0 | 0,57 | 0,57 | 81,6 | + 0,6 | + 90,5 |
| 13 | 80% de zircone thermique monoclinique 20% de zircone yttriée fondue (à 5% de Y₂O₃) | 0,57 | 0 | 0,57 | 79,8 | - 0,5 | + 84,2 |

| | | | | | | | |
|---|---|---|---|---|---|---|---|
| * produit de référence, en dehors de l'invention | | | | | | | |

Ces résultats montrent que, quel que soit son mode d'apport, la présence d'oxyde d'yttrium procure une amélioration de la couleur (tonalité : b est bien plus fort, pureté : a est plus proche de 0 et intensité : L est un peu plus faible).

### Influence du type d'émail

Il est intéressant de voir si l'effet de l'oxyde d'yttrium est identique pour différents types d'émaux. Nous avons réalisé les mêmes essais que pour l'émail transparent avec des pigments semblables à ceux de l'exemple 1(oxyde de praséodyme : 5% et minéralisateurs : 10%). Pour l'émail semi-opaque, on utilise un mélange à 6% de pigment avec une fritte commerciale transparente (KD203) et une fritte commerciale opaque (KD114). Pour l'émail opaque, le pigment a été mélangé à raison de 3% avec la fritte commerciale opaque (KD114). Les résultats sont regroupés dans les tableaux 4 et 5.

**TABLEAU 4**

| Email Semi-Opaque | | | | | | | |
|---|---|---|---|---|---|---|---|
| N° exemple | 14* | 15** | 16 | 17 | 18 | 19 | 20** |
| CC10 (%) | 56,67 | 56,63 | 56,48 | 56,29 | 55,91 | 55,53 | 55,16 |
| silice (%) | 28,33 | 28,31 | 28,24 | 28,14 | 27,96 | 27,77 | 27,57 |
| Y₂O₃ (%) ajouté | 0 | 0,06 | 0,28 | 0,57 | 1,13 | 1,70 | 2,27 |
| L | 87,6 | 88,2 | 87,0 | 86,3 | 86,0 | 86,8 | 87,7 |
| a | -4,7 | -5,0 | -3,9 | -3,3 | -3,2 | -3,3 | -3,4 |
| b | +47,0 | +47,9 | +55,4 | +56,9 | +56,5 | +52,9 | +47,6 |

**TABLEAU 5**

| Email Opaque | | | | | | | |
|---|---|---|---|---|---|---|---|
| N° exemple | 21* | 22** | 23 | 24 | 25 | 26 | 27** |
| CC10 (%) | 56,67 | 56,63 | 56,48 | 56,29 | 55,91 | 55,53 | 55,16 |
| silice (%) | 28,33 | 28,31 | 28,24 | 28,14 | 27,96 | 27,77 | 27,57 |
| Y₂O₃(%) ajouté | 0 | 0,06 | 0,28 | 0,57 | 1,13 | 1,70 | 2,27 |
| L | 91,8 | 91,9 | 91,6 | 91,1 | 90,7 | 91,4 | 91,7 |
| a | -2,8 | -2,7 | -3,2 | -3,0 | -3,2 | -2,6 | -2,3 |
| b | +23,5 | +22,8 | +27,6 | +29,9 | +29,3 | +27,0 | +23,0 |

| | | | | | | | |
|---|---|---|---|---|---|---|---|
| * produit de référence, en dehors de l'invention | | | | | | | |
| ** produit en dehors de l'invention | | | | | | | |

Les figures 2 et 3 permettent de mieux visualiser les résultats en ce qui concerne la composante b. On remarque que la qualité de la couleur jaune dans ces émaux est améliorée sur la même plage de concentration d'oxyde d'yttrium que celle qui avait été mise en évidence dans le cas d'un émail transparent.

En conclusion, on peut dire que dans tous les cas, la présence de 0,2 à 1,8% d'oxyde d'yttrium dans la composition permet d'améliorer la qualité de la couleur jaune d'un pigment zircon-praséodyme.

## Revendications

1. Pigment jaune caractérisé en ce qu'il présente l'analyse chimique suivante, en % en poids sur la base des
52,6 à 71,7% de ZrO₂,
21,6 à 38,8% de SiO₂,
3 à 6,4% de Pr₆O₁₁, et
0,3 à 2,2% de Y₂O₃.

2. Pigment selon la revendication 1 caractérisé en ce qu'il présente l'analyse chimique suivante, en % en poids sur la base des oxydes :
55 à 71% de ZrO₂,
22 à 38% de SiO₂,
3 à 6% de Pr₆O₁₁, et
0,4 à 1,5% de Y₂O₃

3. Pigment selon la revendication 1 caractérisé en ce qu'il présente l'analyse chimique suivante, en % en poids sur la base des oxydes :
56 à 71% de ZrO₂,
23 à 38% de SiO₂,
4,5 à 5,5% de Pr₆O₁₁, et
0,5 à 1% de Y₂O₃.

4. Composition utile pour la préparation d'un pigment selon la revendication 1, caractérisée en ce qu'elle contient, en % en poids :
51 à 61% de zircone synthétique ou naturelle,
21 à 33% de silice,
3 à 5,5% d'oxyde de praséodyme,
0,2 à 1,8% d'oxyde d'yttrium, et
3 à 15% de minéralisateurs.

5. Composition selon la revendication 4, caractérisée en ce qu'elle contient, en % en poids :
52 à 61% de zircone synthétique ou naturelle,
22 à 33% de silice,
3 à 5,5% d'oxyde de praséodyme,
0,2 à 1,8% d'oxyde d'yttrium, et
6 à 10% de minéralisateurs.

6. Composition selon la revendication 4 ou 5, caractérisée en ce que les minéralisateurs sont choisis parmi les halogénures de métaux alcalins ou alcalino-terreux, ou d'ammonium.

7. Composition chimique selon la revendication 6, caractérisée en ce qu'elle contient, en tant que minéralisateurs :
2 à 5% en poids de chlorure de sodium,
2 à 4% en poids de fluorure de sodium, et
0 à 4% en poids de chlorure d'ammonium.

## Patentansprüche

1. Gelbes Pigment, dadurch gekennzeichnet, dass es die folgende chemische Analyse in Gew.-% auf der Grundlage von
52,6 bis 71,7 % ZrO₂,
21,6 bis 38,8 % SiO₂,
3 bis 6,4 % Pr₆O₁₁ und
0,3 bis 2,2 % Y₂O₃
aufweist.

2. Pigment nach Anspruch 1, dadurch gekennzeichnet, dass es die folgende chemische Analyse in Gew.-% auf der Grundlage der Oxide:
55 bis 71 % ZrO₂,
22 bis 38 % SiO₂,
3 bis 6 % Pr₆O₁₁ und
0,4 bis 1,5 % Y₂O₃
aufweist.

3. Pigment nach Anspruch 1, dadurch gekennzeichnet, dass es die folgende chemische Analyse in Gew.-% auf der Grundlage der Oxide:
56 bis 71 % ZrO₂,
23 bis 38 % SiO₂,
4,5 bis 5,5 % Pr₆O₁₁ und
0,5 bis 1 % Y₂O₃
aufweist.

4. Zur Herstellung eines Pigments nach Anspruch 1 brauchbare Zusammensetzung, dadurch gekennzeichnet, dass sie, bezogen auf Gew.-%,
51 bis 61 % synthetisches oder natürliches Zirkoniumdioxid,
21 bis 33 % Siliciumdioxid,
3 bis 5,5 % Praseodymoxid,
0,2 bis 1,8 % Yttriumoxid und
3 bis 15 % Mineralisatoren
enthält.

5. Zusammensetzung nach Anspruch 4, dadurch gekennzeichnet, dass sie, bezogen auf Gew.-%,
52 bis 61 % synthetisches oder natürliches Zirkoniumdioxid,
22 bis 33 % Siliciumdioxid,
3 bis 5,5 % Praseodymoxid,
0,2 bis 1,8 % Yttriumoxid und
6 bis 10 % Mineralisatoren
enthält.

6. Zusammensetzung nach Anspruch 4 oder 5, dadurch gekennzeichnet, dass die Mineralisatoren aus Alkali- oder Erdalkalimetall- oder Ammoniumhalogeniden ausgewählt sind.

7. Chemische Zusammensetzung nach Anspruch 6, dadurch gekennzeichnet, dass sie als Mineralisatoren:
2 bis 5 Gew.-% Natriumchlorid,
2 bis 4 Gew.-% Natriumfluorid und
0 bis 4 Gew.-% Ammoniumchlorid
enthält.

## Claims

1. A yellow pigment characterised in that it has the following chemical analysis in % by weight based on the oxides:
52.6% to 71.7% ZrO₂,
21.6% to 38.8% SiO₂,
3% to 6.4% Pr₆O₁₁, and
0.3% to 2.2% Y₂O₃.

2. A pigment according to claim 1, characterised in that it the following chemical analysis in % by weight based on the oxides:
55% to 71% ZrO₂,
22% to 38% SiO₂,
3% to 6% Pr₆O₁₁, and
0.4% to 1.5% Y₂O₃.

3. A pigment according to claim 1, characterised in that it has the following chemical analysis in % by weight based on the oxides:
56% to 71% ZrO₂,
23% to 38% SiO₂,
4.5% to 5.5% Pr₆O₁₁, and
0.5% to 1% Y₂O₃.

4. A composition that can be used to prepare a pigment according to claim 1, characterised in that it contains, in % by weight:
51% to 61% synthetic or natural zirconia,
21% to 33% silica,
3% to 5.5% praseodymium oxide,
0.2% to 1.8% yttrium oxide, and
3% to 15% mineralisers.

5. A composition according to claim 4, characterised in that it contains, in % by weight:
52% to 61% synthetic or natural zirconia,
22% to 33% silica,
3% to 5.5% praseodymium oxide,
0.2% to 1.8% yttrium oxide, and
6% to 10% mineralisers.

6. A composition according to claim 4 or claim 5, characterised in that the mineralisers are selected from halides of alkali or alkaline-earth metals or ammonium.

7. A chemical composition according to claim 6, characterised in that it contains the following mineralisers:
2% to 5% by weight sodium chloride,
2% to 4% by weight sodium fluoride, and
0% to 4% by weight ammonium chloride.
